# EUROPÄISCHE PATENTANMELDUNG

(11) **EP 1 065 541 A1**
(43) Veröffentlichungstag der Anmeldung: **03.01.2001**
(21) Anmeldenummer: 00112894.1
(22) Anmeldetag: 19.06.2000
(51) Int. Cl.: G02B 6/38, G02B 6/42

(54) **Steckverbinder**

(30) Priorität: 28.06.1999 DE 19929592
(71) Anmelder: Delphi Technologies, Inc., Troy, MI 48007 (US)
(72) Erfinder: Halbach, Paul Gerhard, 42369 Wuppertal (DE); Haack, Albrecht, 42369 Wuppertal (DE); Schekalla, Peter P., 42329 Wuppertal (DE); Kamil, Uc, 42115 Wuppertal (DE)
(74) Vertreter: Manitz, Finsterwald & Partner

(57) **Zusammenfassung**

Die Erfindung betrifft einen Steckverbinder mit zwei zusammensteckbaren und miteinander verriegelbaren Verbinderteilen (10,12), wobei wenigstens das eine Verbinderteil (10) mit zumindest einem Anschlußelement (14), insbesondere einer optischen Ferrule für Lichtleiter (16), koppelbar ist, das bei zusammengesteckten Verbinderteilen (10,12) in einer vorbestimmten axialen Position relativ zu dem anderen Verbinderteil (12) gehalten ist, und wobei das mit dem einen Verbinderteil (10) axial fest gekoppelte Anschlußelement (14) beim Zusammenstecken mit dem anderen Verbinderteil (12) verriegelbar und die Verriegelung durch ein relativ zu den Verbinderteilen (10,12) axial bewegliches Sperrelement (18) sicherbar ist.

## Beschreibung

Die Erfindung betrifft einen Steckverbinder mit zwei zusammensteckbaren und miteinander verriegelbaren Verbinderteilen, wobei wenigstens das eine Verbinderteil mit zumindest einem Anschlußelement, insbesondere einer optischen Ferrule für Lichtleiter, koppelbar ist, das bei zusammengesteckten Verbinderteilen in einer vorbestimmten axialen Position relativ zu dem anderen Verbinderteil gehalten ist.

Derartige Steckverbinder finden beispielsweise bei der Verbindung von Lichtleitern mit anderen optischen oder opto-elektronischen Bauteilen Verwendung, die z.B. in Kraftfahrzeugen eingesetzt werden. Die zu verbindenden Lichtleiter sind in der Praxis an einem freien Ende mit einem zwingenartigen Anschlußelement versehen, das als Ferrule bezeichnet wird. Während der Lichtleiter über die Ferrule mit dem einen Verbinderteil gekoppelt wird, ist in dem anderen Verbinderteil ein entsprechendes Gegenstück, z.B. ein optisches oder elektrooptisches Modul, angeordnet, über welches die Ein- bzw. Auskopplung von Licht erfolgt.

Die Funktionsfähigkeit und die Qualität der mit diesen Verbinderteilen hergestellten optischen bzw. elektrooptischen Verbindungen ist von der gegenseitigen Ausrichtung der Komponenten, beispielsweise eines Lichtleiters und eines elektrooptischen Moduls, abhängig. Dabei kann eine fehlerhafte Ausrichtung zu inakzeptablen Lichtverlusten führen und die Funktionsfähigkeit des gesamten Lichtleitersystems beeinträchtigen. Dabei kommt der Einhaltung vorbestimmter axialer Abstände zwischen den Komponenten eine besondere Bedeutung zu.

Es ist das der Erfindung zugrundeliegende Problem (Aufgabe), einen Steckverbinder der eingangs genannten Art zu schaffen, der bei zusammengesteckten Verbinderteilen eine möglichst exakte und dauerhafte axiale Positionierung des Anschlußelementes relativ zu dem anderen Verbinderteil gewährleistet und bei dem insbesondere die Verbindung auf möglichst einfache Weise herstellbar und wieder lösbar ist.

Die Lösung dieser Aufgabe erfolgt durch die Merkmale des Anspruchs 1 und insbesondere dadurch, daß das mit dem einen Verbinderteil axial fest gekoppelte Anschlußelement beim Zusammenstecken mit dem anderen Verbinderteil verriegelbar und die Verriegelung durch ein relativ zu den Verbinderteilen axial bewegliches Sperrelement sicherbar ist.

Erfindungsgemäß erfolgt die axiale Positionierung des Anschlußelementes durch die Verriegelung mit dem anderen Verbinderteil. Da das Anschlußelement bereits mit dem einen Verbinderteil axial fest gekoppelt ist, werden durch die Verriegelung des Anschlußelementes mit dem anderen Verbinderteil auch die beiden Verbinderteile miteinander verriegelt, d.h. es erfolgen gleichzeitig die axiale Positionierung des Anschlußelementes und die Verriegelung der beiden Verbinderteile. Die Sicherung der Verriegelung erfolgt erfindungsgemäß durch das Sperrelement, wobei wegen der axialen Beweglichkeit des Sperrelementes relativ zu den Verbinderteilen diese zum Zweck der Sicherung nicht mehr bewegt werden müssen. Die Einhaltung der exakten Positionierung des Anschlußelementes und somit die Einhaltung eines zulässigen minimalen Toleranzbereiches ist auf diese Weise gewährleistet. In Lichtleitersystemen gewährleistet der erfindungsgemäße Steckverbinder somit sowohl in elektrooptischer als auch in mechanischer Hinsicht zuverlässige und dauerhafte Verbindungen.

Gemäß einer bevorzugten Ausführungsform der Erfindung erfolgen die Verriegelung und die Sicherung beim Zusammenstecken der Verbinderteile automatisch. Hierdurch wird der Aufwand zu Herstellung der Steckverbindung auf ein Minimum reduziert.

Gemäß einer weiteren bevorzugten Ausführungsform der Erfindung erfolgt die Verriegelung des Anschlußelementes bei in der vorbestimmten axialen Position befindlichem Anschlußelement. Hierbei wird das mit dem einen Verbinderteil axial gekoppelte Anschlußelement erst dann mit dem anderen Verbinderteil verriegelt, wenn es die gewünschte Relativposition zu diesem Verbinderteil erlangt hat. Hierdurch wird eine besonders exakte Positionierung des Anschlußelementes mit minimalen Toleranzen erzielt.

Gemäß einem weiteren bevorzugten Ausführungsbeispiel der Erfindung ist das Sperrelement relativ zu einem axial fest mit dem Anschlußelement koppelbaren Verbinderelement des Verbinderteils bewegbar. Durch diese mehrteilige Ausführung des mit dem Anschlußelement koppelbaren Verbinderteils kann die Baugröße des Verbinderteils minimiert werden. Das Sperrelement und das Verbinderelement können erfindungsgemäß ineinandersteckbar oder ineinanderschiebbar ausgebildet sein, und es ist erfindungsgemäß auch möglich, das Sperrelement zumindest bereichsweise im Inneren des Verbinderelementes anzuordnen.

Gemäß einem weiteren bevorzugten Ausführungsbeispiel der Erfindung ist beim Zusammenstecken der Verbinderteile die Bewegung des Sperrelementes durch die von dem Anschlußelement beaufschlagte Verriegelung solange blockiert, bis die Verriegelung mit dem relativ zum blockierten Sperrelement weiterbewegten Anschlußelement in Eingriff steht. Dieses Zusammenspiel der einzelnen Bauteile des erfindungsgemäßen Steckverbinders minimiert die Anzahl der erforderlichen Bauteile und ermöglicht es außerdem, die Steckverbindung - und somit sowohl die Positionierung und die Verriegelung des Anschlußelementes als auch die Sicherung der Verriegelung - mit einer einzigen Bewegung, d.h. durch einfaches Zusammenstecken der beiden Verbinderteile, herzustellen.

Wenn gemäß einer weiteren Variante der Erfindung zwischen dem Sperrelement und dem Verbinderelement zumindest ein elastisch verformbares Element, insbesondere eine Schraubenfeder, vorgesehen ist, dann ermöglicht dies einen Aufbau des Steckverbinders, bei welchem das elastisch verformbare Element bzw. die Schraubenfeder zusammengedrückt wird, während das Sperrelement beim Zusammenstecken der Verbinderteile durch die Verriegelung blockiert ist. Die hierdurch gespeicherte Energie wird frei, sobald die Verriegelung mit dem Anschlußelement in Eingriff steht und dadurch die Blockierung des Sperrelementes aufgehoben ist, welches folglich automatisch in seine Endstellung springt, in der es die Verriegelung sichert.

Das Sperrelement kann - gemäß einer weiteren bevorzugten Variante der Erfindung - im Bereich seines mit der Verriegelung zusammenwirkenden Endes abgeschrägt sein, um auf diese Weise in einem blockierten und durch die Schraubenfeder beaufschlagten Zustand die Verriegelung in Eingriff mit dem Anschlußelement vorspannen zu können. Auf diese Weise können durch das Sperrelement z.B. Verriegelungsabschnitte der Verriegelung in Richtung einer Umfangsausnehmung des Anschlußelementes beaufschlagt werden. Die Verriegelungsabschnitte können einstückig mit dem Verbinderelement ausgebildet und z.B. in Form von Rastarmen vorgesehen sein. Es ist auch möglich, ein separates Bauteil z.B. in Form eines gebogenen Federdrahtes für die Verriegelung vorzusehen. Der Federdraht kann beispielsweise U-förmig gebogen und in geeigneter Weise axial fest im Verbinderteil angeordnet werden.

Gemäß einer weiteren bevorzugten Ausführungsform der Erfindung ist die Außenseite des mit dem Anschlußelement koppelbaren Verbinderteils teilweise von dem Sperrelement gebildet. Auf diese Weise ist das Sperrelement von außen zugänglich, so daß die Steckverbindung einfach durch Bewegen des Sperrelementes in Entsicherungsrichtung und anschließendes Auseinanderziehen der beiden Verbinderteile wieder gelöst werden kann.

Gemäß einer weiteren bevorzugten Variante der Erfindung ist das mit der Verriegelung versehene Verbinderteil als ein Zwischenstück ausgebildet, welches beidseitig mit einem ein Anschlußelement aufweisenden Verbinderteil zusammensteckbar ist.

Mit einem derartigen Zwischenstück, das gewissermaßen als Adapter für die beiden Verbinderteile dient, können sogenannte In-line-Verbindungen zwischen jeweils zwei Anschlußelementen und somit z.B. Lichtleitern hergestellt werden. Das Zwischenstück, welches vorzugsweise hinsichtlich seines Kopplungs- bzw. Steckbereiches einem mit einem elektrooptischen Modul versehenen Verbinderteil entspricht, kann so ausgeführt werden, daß es im zusammengesteckten Zustand vollständig innerhalb der beiden jeweils mit einem Anschlußelement versehenen Verbinderteile angeordnet ist. Die Steckverbindung wird auf diese Weise nicht unnötig verlängert. Bevorzugt sind die Kopplungsbereiche des Zwischenstücks baugleich, wodurch lediglich eine einzige Bauform von mit Anschlußelementen koppelbaren Verbinderteilen erforderlich ist.

Weitere Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1: die Bauteile eines Verbinderteils zur Kopplung mit einem Anschlußelement gemäß einer Ausführungsform der Erfindung,
- Fig. 2: ein Verbinderteil gemäß einer Ausführungsform der Erfindung, das mit dem Verbinderteil von Fig. 1 zusammensteckbar ist,
- Fig. 3a - 3d: einzelne Phasen beim Zusammenstecken zweier erfindungsgemäßer Verbinderteile jeweils in einer geschnittenen Seitenansicht,
- Fig. 4: eine weitere Ausführungsform eines erfindungsgemäßen Steckverbinders,
- Fig. 5a und 5b: jeweils ein Verbinderteil zur Aufnahme von zwei Anschlußelementen gemäß einer weiteren Ausführungsform der Erfindung,
- Fig. 6a und 6b: ein Verbinderteil zur Aufnahme eines elektrooptischen Moduls, das mit dem Verbinderteil von Fig. 5a und 5b zusammensteckbar ist,
- Fig. 7a und 7b: perspektivische Ansichten der zusammengesetzten Verbinderteile zur Erläuterung der Herstellung und des Lösens der Steckverbindung, und
- Fig. 8a - 8e: einzelne Phasen beim Zusammenstecken der beiden Verbinderteile.

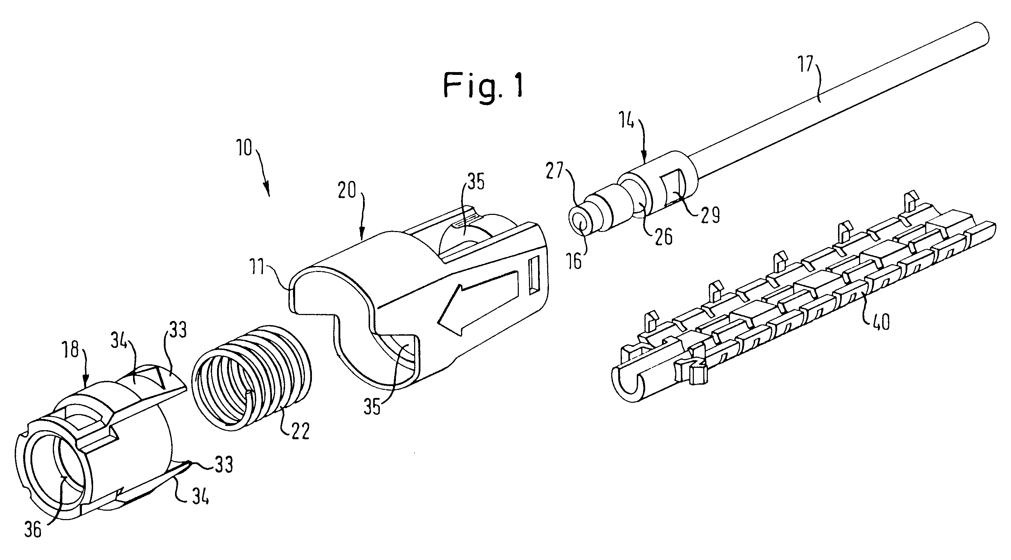

Fig. 1 zeigt drei Bauteile eines Verbinderteils 10, das Bestandteil eines Steckverbinders gemäß einer Ausführungsform der Erfindung ist. Das Verbinderteil 10 umfaßt ein hülsenartiges Verbinderelement 20, ein ebenfalls hülsenartiges Sperrelement 18 kleineren Durchmessers sowie eine Schraubenfeder 22. Das Sperrelement 18 kann von vorne in das Verbinderelement 20 eingeschoben werden, wobei diametral gegenüberliegende, jeweils eine Betätigungsmulde 34 aufweisende Betätigungsbereiche 33 im Bereich von entsprechenden Aussparungen 35 des Verbinderelementes 20 angeordnet und somit im zusammengesetzten Zustand von außen zugänglich sind. Beim Zusammensetzen des Verbinderteils 10 werden das Sperrelement 18 und das Verbinderelement 20 lösbar miteinander verrastet, wobei sich die im zusammengesetzten Zustand zwischen den beiden Teilen 18, 20 angeordnete Schraubenfeder 22 im hinteren Bereich des Verbinderelementes 20 und an einem Ringvorsprung 36 an der Innenwand des Sperrelementes 18 abstützt.

Das Verbinderelement 20 ist mit einem Fortsatz 11 versehen, der etwa über den halben Umfang des Verbinderelementes 20 über dessen vorderes Ende hinaus vorsteht, jedoch auch als sich über den ganzen Umfang erstreckender hülsenförmiger Fortsatz ausgebildet sein könnte.

Mit dem Verbinderteil 10 ist ein Anschlußelement in Form einer Ferrule 14 koppelbar, die zwingenartig das freie Ende eines mit einer Ummantelung 17 versehenen Lichtleiters 16 umgibt. Die Ferrule 14 ist im vorderen Bereich 27 mit einer Verjüngung und im mittleren Bereich mit einer Umfangsausnehmung 26 versehen. Die zylindrische Ferrule 14 weist des weiteren einen hinteren Verriegelungsbereich 29 auf, über welchen sie mit dem Verbinderelement 20 gekoppelt werden kann. In Fig. 1 ist außerdem eine Halbschale 40 einer optionalen Aufnahmevorrichtung zur Aufnahme der Ferrule 14 und des Lichtleiters 16 gezeigt. Die Aufnahmevorrichtung ist mit dem Verbinderelement 20 verrastbar.

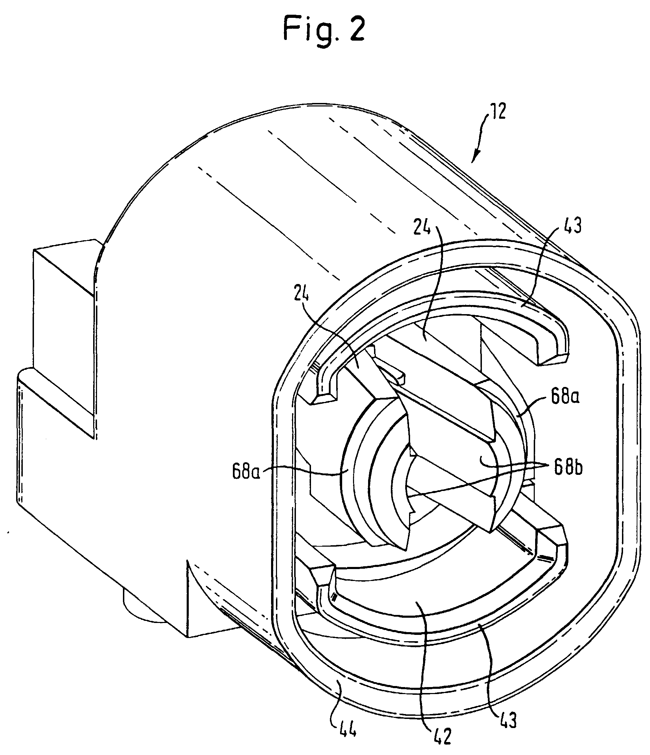

Fig. 2 zeigt das andere Verbinderteil 12 des erfindungsgemäßen Steckverbinders, das mit dem Verbinderteil 10 von Fig. 1 zusammensteckbar ist. In dem Verbinderteil 12 ist ein elektrooptisches Modul angeordnet, das in Fig. 2 nicht zu erkennen ist und das mit dem Lichtleiter 16 von Fig. 1 zusammenwirkt, um optische Signale in elektrische Signale oder umgekehrt umzuwandeln. Dabei kann es sich grundsätzlich um ein beliebig ausgeführtes elektrooptisches Modul handeln. Das das elektrooptische Modul aufnehmende Verbinderteil 12 wird auch als Header bezeichnet und kann entweder als Steckteil oder als Aufnahmeteil ausgebildet sein.

Das Verbinderteil oder der Header 12 umfaßt ein Innenteil 42 und ein Außenteil 44, die entweder einstückig ausgebildet oder lösbar miteinander verbindbar, beispielsweise verrastbar, sind. Der radiale Zwischenraum zwischen Innenteil 42 und Außenteil 44 ist ausreichend groß, um den Fortsatz 11 des Verbinderelementes 20 des die Ferrule 14 aufnehmenden Verbinderteils 10 von Fig. 1 aufzunehmen, wenn die beiden Verbinderteile 10, 12 zusammengesteckt sind.

Einstückig mit dem Innenteil 42 sind zwei diametral einander gegenüberliegende, jeweils näherungsweise einen halbkreisförmigen Querschnitt aufweisende Verriegelungsabschnitte 24 ausgebildet, die gegenüber zwei ebenfalls diametral einander gegenüberliegenden, jedoch einen größeren Abstand voneinander aufweisenden Abschnitten 43 um 90° verdreht sind. Die Abschnitte 43 des Innenteils 42 weisen einen bogenförmigen Querschnitt auf.

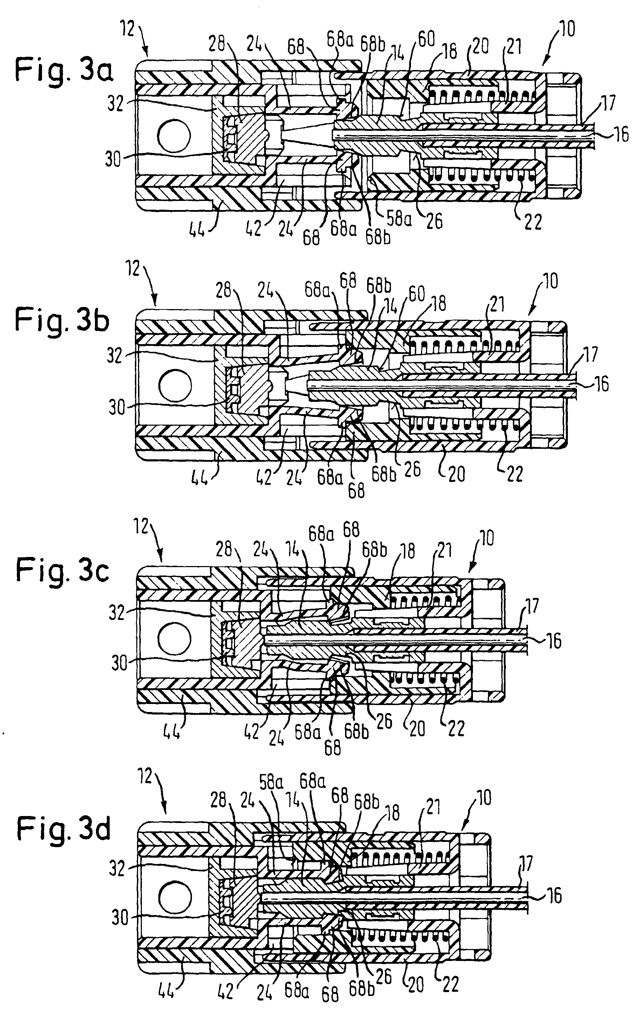

Die beiden Verriegelungsabschnitte 24 des Innenteils 42 sind jeweils mit einem radial nach außen abstehenden Haltevorsprung 68a derart versehen, daß die Vorsprünge 68a eine etwa senkrecht zur Längsachse des Verbinderteils 12 verlaufende Fläche in Form eines unterbrochenen Kreisrings bilden. Wie nachfolgend anhand der Fig. 3a - 3d erläutert wird, dienen die Vorsprünge 68a zum Blockieren des Sperrelementes 18 des Verbinderteils 10 von Fig. 1 beim Zusammenstecken der beiden Verbinderteile 10, 12.

Ebenfalls im Bereich ihres vorderen Endes sind die beiden Verriegelungsabschnitte 24 mit radial nach innen vorstehenden Eingriffsvorsprüngen 68b versehen. Die Eingriffsvorsprünge 68b stehen im zusammengesteckten Zustand des erfindungsgemäßen Steckverbinders mit der Ferrule 14 an deren Umfangsausnehmung 26 in Eingriff und sind zu diesem Zweck mit einer rinnenförmigen, an die zylindrische Form der Ferrule 14 im Bereich ihrer Umfangsausnehmung 26 angepaßten Innenseite versehen.

Die Verriegelungsabschnitte 24 sind elastisch derart verformbar, daß sie radial auseinandergedrückt, d.h. aufgespreizt, werden können. Der Abstand der Verriegelungsabschnitte 24 ist derart bemessen, daß das Aufspreizen durch das Einstecken der Ferrule 14 erfolgt.

Das bevorzugte Material für das Verbinderteil 12 sowie für das Sperrelement 18 und das Verbinderelement 20 des die Ferrule 14 aufnehmenden Verbinderteils 10 ist Kunststoff.

Die Funktionsweise des erfindungsgemäßen Steckverbinders wird nachstehend anhand der Fig. 3a - 3d erläutert.

Zu Beginn des Zusammensteckens der beiden Verbinderteile 10, 12 werden gemäß Fig. 3a die beiden Verriegelungsabschnitte 24 durch den verjüngten vorderen Bereich der Ferrule 14 auseinandergedrückt. Die Eingriffsabschnitte 68, insbesondere deren radial nach innen vorstehenden Eingriffsvorsprünge 68b, können dabei im wesentlichen ohne Widerstand auf der Außenfläche der Ferrule 14 entlanggleiten.

Zum Herstellen der Steckverbindung wird das die Ferrule 14 aufnehmende Verbinderteil 10 von einem Benutzer am Verbinderelement 20 gehalten, das mit seinem vorderen, die Spitze der Ferrule 14 umgebenden Ende zwischen Innenteil 42 und Außenteil 44 des anderen Verbinderteils 12 geschoben wird.

Das in Fig. 3a erkennbare elektrooptische Modul 28 kann beispielsweise seitlich in das Verbinderteil 12 eingeführt werden, wobei in der dargestellten Ausführungsform die Positionierung des Moduls 28 durch eine Halterung 32 des Innenteils 42 sowie durch ein separates und beispielsweise federnd ausgebildetes Positionierstück 30 erfolgt.

Aus Fig. 3a ist außerdem zu erkennen, daß das vordere Ende des Sperrelementes 18 mit einer Schräge 58a versehen ist, und daß die Umfangsausnehmung 26 auf der dem freien Ende der Ferrule 14 zugewandten Seite durch eine Schräge 60 begrenzt wird.

Des weiteren geht aus Fig. 3a hervor, daß die Schraubenfeder 22 in einem Ringraum des Verbinderelementes 20 angeordnet ist und sich an dessen Boden abstützt, wobei radial innen der Ringraum von einem hülsenartigen Abschnitt 21 des Verbinderelementes 20 begrenzt ist, auf welchen die Schraubenfeder 22 gesteckt ist und welcher den hinteren Bereich der Ferrule 14 umgibt.

Gemäß Fig. 3b sind die beiden Verbinderteile 10, 12 so weit zusammengesteckt, daß die auf der Außenseite des Mittelteils der Ferrule 14 aufliegenden Verriegelungsabschnitte 24 bezüglich der jeweiligen Ferrule 14 maximal auseinandergedrückt sind und die radial nach außen abstehenden Haltevorsprünge 68a das Sperrelement 18 blockieren, das mit seiner Schräge 58a formschlüssig im Bereich der Haltevorsprünge 68a an den Eingriffsabschnitten 68 anliegt.

Fig. 3c zeigt den Zustand unmittelbar bevor die Ferrule 14 ihre vorbestimmte axiale Position relativ zu dem Verbinderteil 12 erreicht, d.h. unmittelbar vor dem vollständigen Zusammenstecken der beiden Verbinderteile 10, 12. Während das Verbinderelement 20 zusammen mit der axial fest gekoppelten Ferrule 14 weiter in das Verbinderteil 12 hineingeschoben wurde, hat sich das Sperrelement 18 nicht weiterbewegt, da es durch die Haltevorsprünge 68a der Verriegelungsabschnitte 24 blockiert war. Im Zustand von Fig. 3c ist das Sperrelement 18 noch blockiert, da die Vorsprünge 68b noch nicht mit der Umfangsausnehmung 26 in Eingriff stehen. Durch die auf diese Weise erzwungene Relativbewegung zwischen Verbinderelement 20 und Sperrelement 18 wird die Schraubenfeder 22 gespannt, indem sie zwischen dem hinteren Ende des Verbinderelementes 20 und dem sich bezogen auf das Verbinderelement 20 nach hinten bewegenden Sperrelement 18 zusammengedrückt wird.

Sobald gemäß Fig. 3d die beiden Verbinderteile 10, 12 vollständig zusammengesteckt sind und somit die Ferrule 14 ihre endgültige axiale Position erreicht hat, rasten die Verriegelungsabschnitte 24 mit ihren Eingriffsvorsprüngen 68b in der Umfangsausnehmung 26 der Ferrule 14 ein. Dadurch bewegen sich die Haltevorsprünge 68a radial nach innen und die Blockierung des Sperrelementes 18 wird aufgehoben. Das zu diesem Zeitpunkt durch die zusammengedrückte Schraubenfeder 22 vorgespannte Sperrelement 18 springt somit ruckartig nach vorne in das andere Verbinderteil 12 hinein, wobei die Bemessungen derart gewählt sind, daß dabei die Haltevorsprünge 68a auf der Innenseite des Sperrelementes 18 entlanggleiten. Die Verriegelung bzw. Verrastung und deren Sicherung erfolgen somit bei in ihrer axialen Endposition befindlicher Ferrule 14.

Die Verriegelung zwischen den Verriegelungsabschnitten 24 und der Ferrule 14 kann sich aufgrund des sich über die Eingriffsabschnitte 68 geschobenen Sperrelementes 18 nicht lösen. Die Verriegelung zwischen Ferrule 14 und dem das elektrooptische Modul 28 aufnehmenden Verbinderteil 12 ist daher im endgültig zusammengesteckten Zustand gemäß Fig. 3d durch das Sperrelement 18 gesichert. Da die Ferrule 14 axial fest mit dem Verbinderelement 20 des Verbinderteils 10 gekoppelt ist, sorgt die Verrastung zwischen den Verriegelungsabschnitten 24 und der Ferrule 14 gleichzeitig für die Verriegelung der Verbinderteile 10, 12 miteinander. Die Sicherung der axialen Position der Ferrule 14 durch das Sperrelement 18 bildet daher gleichzeitig auch die Sicherung der Verriegelung der beiden Verbinderteile 10, 12 untereinander. Zusätzliche Verriegelungs- und Sicherungseinrichtungen sind erfindungsgemäß somit nicht erforderlich.

Bei dem erfindungsgemäßen Zusammenspiel der einzelnen Bauteile des Steckverbinders ist somit dafür gesorgt, daß die aufgespreizten Verriegelungsabschnitte 24 das Sperrelement 18 spannen, bevor die Verriegelungsabschnitte 24 mit der Ferrule 14 verrastet werden und das Sperrelement freigeben, wobei das Aufspreizen der Verriegelungsabschnitte 24 beim Zusammenstecken der Verbinderteile 10, 12 durch die Ferrule 14 selbst erfolgt.

Zum Herstellen der Steckverbindung ist bei dem erfindungsgemäßen Steckverbinder daher lediglich eine einzige Zusammensteckbewegung erforderlich und sowohl die Verriegelung als auch die Sicherung erfolgen beim Zusammenstecken automatisch. Zum Lösen der Steckverbindung ist es lediglich erforderlich, das Sperrelement 18 gegen die Kraft der Schraubenfeder 22 zurückzuziehen. Sobald die Eingriffsabschnitte 68 durch das zurückgezogene Sperrelement 18 freigegeben sind, können die Vorsprünge 68b außer Eingriff mit der Umfangsausnehmung 26 der Ferrule 14 gelangen, wenn das Verbinderelement 20 und somit die axial mit diesem gekoppelte Ferrule 14 über das Sperrelement 18 aus dem Verbinderteil 12 herausgezogen wird. Die Eingriffsvorsprünge 68b rutschen dabei entlang der Schräge 60 aus der Umfangsausnehmung 26 heraus. Die beiden Verbinderteile 10, 12 können somit vollständig voneinander getrennt werden.

Das Zurückziehen des Sperrelementes 18 erfolgt über die von außen zugänglichen Betätigungsbereiche 33 (vgl. Fig. 1) und wird durch die ergonomisch geformten Betätigungsmulden 34 erleichtert. Wie aus Fig. 1 erkennbar, können die Betätigungsbereiche 33 mit entsprechenden Pfeilmarkierungen und Beschriftungen versehen sein. Ebenso kann die Außenseite des Verbinderelementes 20 mit Pfeilmarkierungen und Beschriftungen versehen sein, die einen Benutzer darauf hinweisen, daß zum Herstellen der Steckverbindung das die Ferrule 14 aufnehmende Verbinderteil 10 am Verbinderelement 20 zu halten ist.

Bei in der axialen Endposition befindlicher Ferrule 14 gemäß Fig. 3d ist die Lichteintritts- und/oder -austrittsfläche des Lichtleiters 16 in der eine optimale Einkopplung bzw. Auskopplung von Licht gewährleistenden Lage relativ zu dem jeweiligen elektrooptischen Modul 28 in dem erfindungsgemäßen Steckverbinder positioniert. Diese optimale Ausrichtung zwischen Lichtleiter 16 und Modul 28 wird durch die Verriegelungsabschnitte 24 und deren Sicherung mittels des Sperrelementes 18 dauerhaft mit minimalen Toleranzen aufrechterhalten.

Durch die Sicherung der die Verriegelung zwischen den beiden Verbinderteilen 10, 12 bewirkenden Verriegelungsabschnitte 24 durch das Sperrelement 18 ist der erfindungsgemäße Steckverbinder mit einer sogenannten CPA-(Connecter-Position-Assurance-) Funktion versehen, d.h. das Sperrelement 18 sichert nicht nur die axiale Position der Ferrule 14 und somit des Lichtleiters 16, sondern gleichzeitig auch die relative Lage der Verbinderteile 10, 12.

Aus Fig. 3d ist zu erkennen, daß zumindest in einer senkrecht zur Zusammensteckrichtung verlaufenden Ebene keine radialen Zwischenräume zwischen den einzelnen Bauteilen vorhanden sind, so daß zusätzlich zu der optimalen axialen Ausrichtung bzw. Positionierung der Ferrule 14 und des Lichtleiters 16 auch eine exakte radiale Positionierung der Ferrule 14 und des Lichtleiters 16 in dem erfindungsgemäßen Steckverbinder sichergestellt ist.

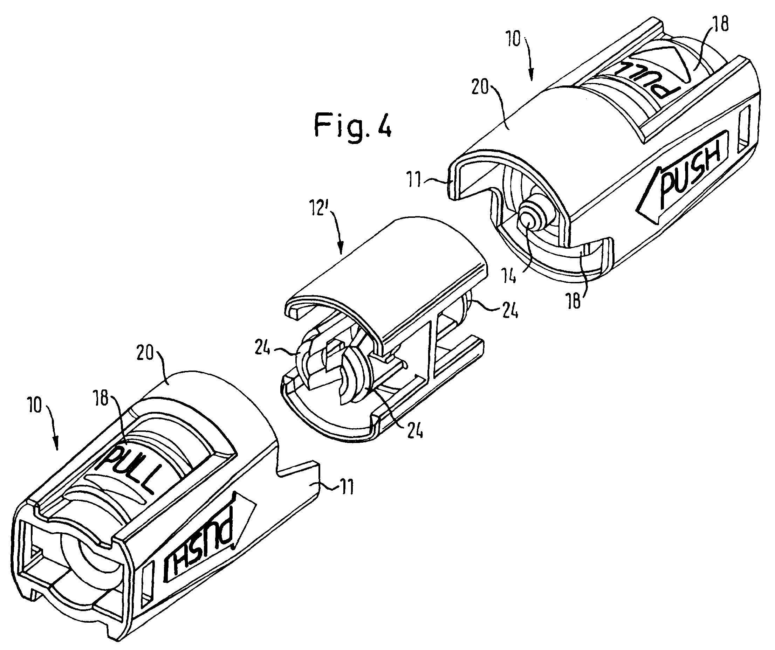

Fig. 4 zeigt eine andere Ausführungsform der Erfindung, bei welcher ein Verbinderteil 12' als ein Zwischenstück ausgebildet ist, das zwei baugleiche Verriegelungsbereiche aufweist, wie sie vorstehend in Verbindung mit Fig. 2 und Fig. 3 beschrieben wurden. Zwei um 180° gegeneinander verdrehte, jeweils eine optische Ferrule 14 aufnehmende Verbinderteile 10 können auf diese Weise derart miteinander verbunden werden, daß jede Ferrule 14 durch das jeweilige Paar von Verriegelungsabschnitten 24 verriegelt und die Verriegelung durch das jeweilige Sperrelement 18 gesichert wird. Das Zwischenstück 12' dient damit als ein Adapter für zwei baugleiche Verbinderteile 10.

Die axiale Länge des Adapters 12' ist so bemessen, daß die Lichteintritts- bzw. Lichtaustrittsflächen der Lichtleiter 16 bei zusammengesteckten Verbinderteilen 10, 12' in einem für die Übertragung von Licht optimalen Abstand zueinander positioniert sind. Des weiteren ist das Zwischenstück 12' derart ausgeführt, daß es bei hergestellter Steckverbindung vollständig innerhalb der Verbinderteile 10 angeordnet ist.

Diese Ausführung des Verbinderteils 12' erlaubt die Herstellung von sogenannten In-line-Verbindungen mit Hilfe von zwei baugleichen Verbinderteilen 10 ohne die Länge des Lichtleitersystems unnötig zu vergrößern.

Erfindungsgemäß können die Verbinderteile 10, 12, 12' auch zur Kopplung mehrerer Ferrule 14 und somit mehrerer Lichtleiter 16 gleichzeitig ausgebildet sein. Hierzu könnte beispielsweise das Verbinderteil 12 mit mehreren nebeneinanderliegenden Paaren von Verriegelungsabschnitten 24 versehen sein, während die Verbinderteile 10 jeweils nebeneinanderliegende Bereiche entsprechend dem Verbinderelement 20 für die Ferrule 14 sowie jeweilige Sperrelemente 18 aufweisen würden.

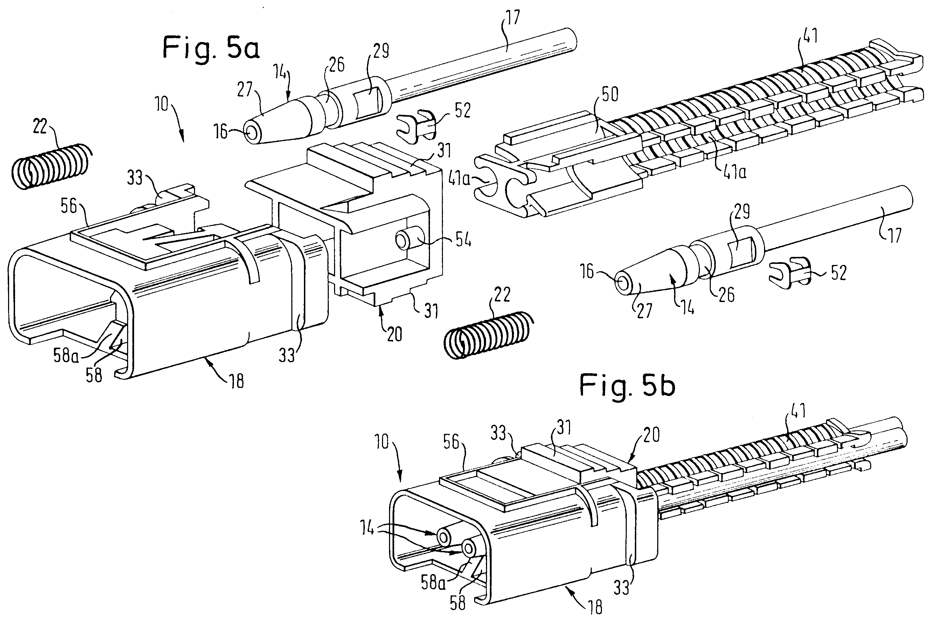

Das Verbinderteil 10 gemäß Fig. 5a und 5b, die eine andere Ausführungsform der Erfindung zeigen, umfaßt ein Sperrelement 18 und ein Verbinderelement 20, die unter Zwischenlage von zwei Schraubenfedern 22, die auf Zapfen 54 des Verbinderelementes 20 steckbar sind, zusammengesteckt und miteinander verrastet werden können. Das Verbinderelement 20 ist axial fest mit einem Koppelstück 50 koppelbar, das an dem einen Ende einer Aufnahmevorrichtung 41 für Lichtleiter 16 ausgebildet ist. Die Aufnahmevorrichtung 41 weist zwei Aufnahmekanäle 41a auf, in welche jeweils ein mit einer Ummantelung 17 versehener Lichtleiter 16 eingelegt werden kann. Am freien Ende der Lichtleiter 16 ist jeweils eine optische Ferrule 14 vorgesehen, die als zwingenartiges Anschlußelement den jeweiligen Lichtleiter 16 umgibt. Mittels Clips 52, die mit Verriegelungsbereichen 29 zusammenwirken, sind die Ferrule 14 im jeweiligen Aufnahmebereich des Koppelstücks 50 fixierbar. Die Ferrule 14 sind jeweils mit einer Umfangsausnehmung 26 in Form einer Ringnut versehen, von der aus sich die Ferrule 14 jeweils zur Spitze hin verjüngen. Aus Fig. 5b ist zu erkennen, daß im zusammengesetzten Zustand des Verbinderteils 10 und bei eingekoppeltem Koppelstück 50 die sich verjüngenden vorderen Bereiche 27 der Ferrule 14 aus dem Koppelstück 50 herausragen, sich jedoch noch innerhalb des Sperrelementes 18 befinden.

Sowohl das Sperrelement 18 als auch das Verbinderelement 20 ist jeweils mit Betätigungsbereichen 33 bzw. 31 versehen, an denen das betreffende Element zum Lösen bzw. Herstellen der Steckverbindung von einem Benutzer gehalten wird, wie an anderer Stelle näher beschrieben wird. Die Betätigungsbereiche 33 des Sperrelementes 18 umfassen seitlich abstehende Ansätze, während die Betätigungsbereiche 31 des Verbinderelementes 20 jeweils als mehrfach abgestufter Oberflächenbereich vorgesehen sind.

Im zusammengesetzten Zustand des Verbinderteils 10 sind das Verbinderelement 20, mit welchem das Koppelstück 50 der Aufnahmevorrichtung 41 - und somit die optischen Ferrule 14 und die Lichtleiter 16 - axial fest gekoppelt sind, und das Sperrelement 18 in axialer Richtung gegeneinander verschiebbar. Dabei wird das Verbinderelement 20 durch rippenartige Erhebungen 56 auf der Außenseite des Sperrelementes 18 geführt.

Das Sperrelement 18 ist mit zwei mittig angeordneten Sperrabschnitten 58 versehen, zwischen denen sich im zusammengesetzten Zustand gemäß Fig. 5b die Ferrule 14 befinden. In ihrem vorderen Bereich sind die Sperrabschnitte 58 jeweils mit einer Schräge 58a versehen.

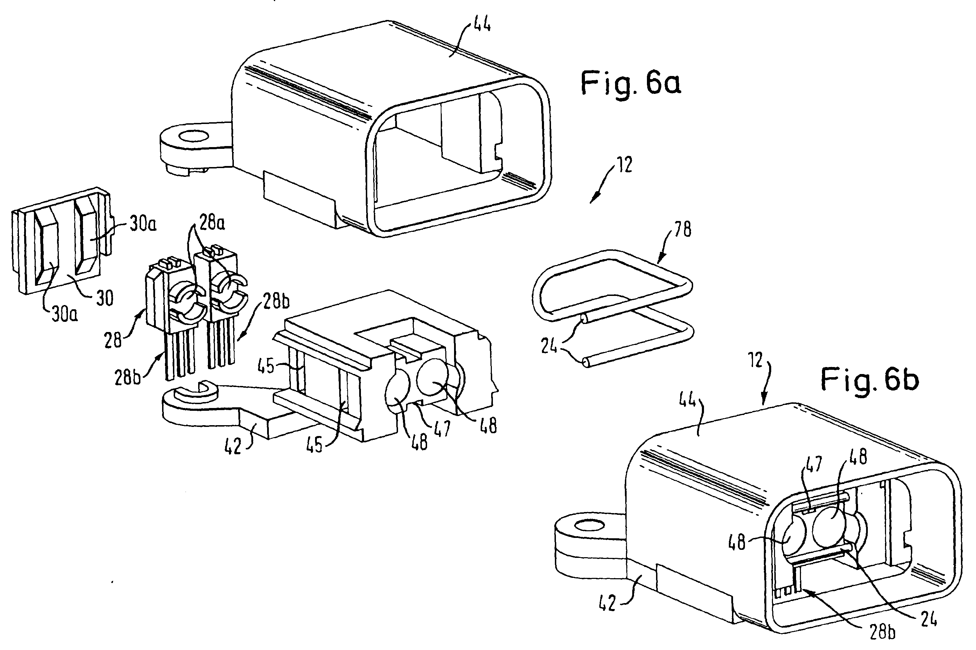

Das Verbinderteil 12 gemäß Fig. 6a und 6b, das mit dem Verbinderteil 10 der Fig. 5a und 5b zusammensteckbar ist und zur Aufnahme eines elektrooptischen Moduls 28 dient, wird auch als Header bezeichnet.

Das mit Anschlüssen 28b und Koppelbereichen 28a für Lichtleiter versehene elektrooptische Modul 28, für das grundsätzlich ein beliebig ausgeführtes Modul vorgesehen sein kann, wird in ein Innenteil 42 des Verbinderteils 12 eingeschoben und durch ein Positionierstück 30 mit federnden, jeweils einen Koppelbereich 28a des elektrooptischen Moduls 28 beaufschlagenden Bereichen 30a in der jeweils gewünschten Position im Innenteil 42 fixiert.

Ein Federdraht 78 dient als Verriegelung für die Ferrule 14, die mit dem Verbinderteil 10 von Fig. 5a und 5b koppelbar sind. Die in Fig. 6a dargestellte Raumstruktur des Federdrahtes 78 wird erhalten, indem ein Draht zunächst zu einer schmalen U-Form gebogen wird und diese U-Form erneut etwa U-förmig gebogen wird. Ein Schenkel des endgültigen U wird somit von den beiden parallel zueinander verlaufenden freien Enden des Federdrahtes 78 gebildet, die als Verriegelungsabschnitte 24 der Verriegelung dienen. Im Innenteil 42 sind schlitzförmige Durchgänge 45 ausgebildet, in welche die Schenkel des U-förmig gebogenen Federdrahtes 78 eingeschoben werden können. Aus Fig. 6b ist zu erkennen, daß sich die Verriegelungsabschnitte 24 des Federdrahtes 78 im zusammengesetzten Zustand des Verbinderteils 12 unmittelbar vor einem Aufnahmebereich 47 des Innenteils 42 befinden, in welchem zylindrische Durchgänge 48 für die im Verbinderteil 10 von Fig. 5a und 5b angeordneten Ferrule 14 ausgebildet sind. Die Koppelbereiche 28a des elektrooptischen Moduls liegen im zusammengesetzten Zustand des Verbinderteils 12 hinter den Durchgängen 48 des Aufnahmebereiches 47. In Fig. 6b sind außerdem die Anschlüsse 28b des elektrooptischen Moduls 28 zu erkennen, die aus dem Verbinderteil 12 herausragen.

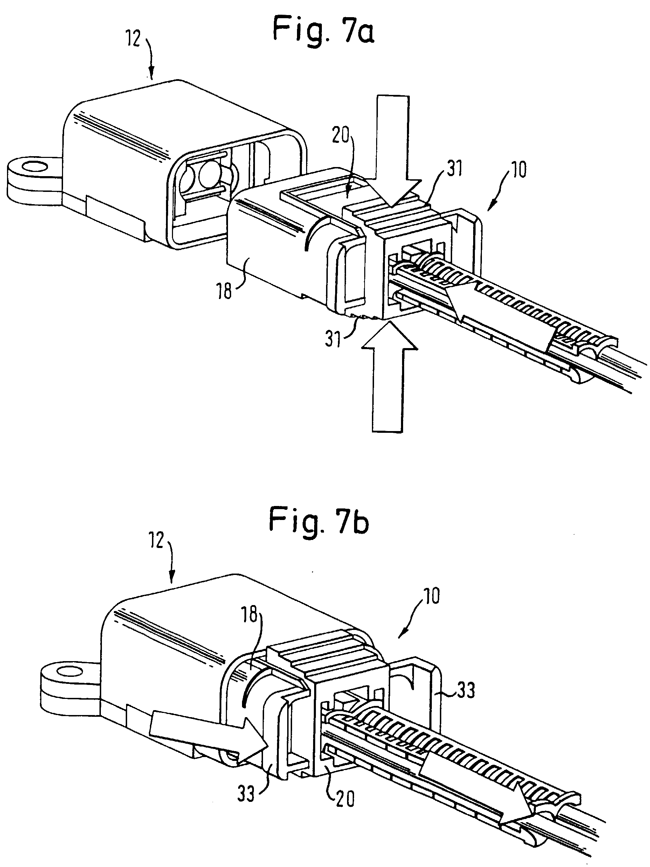

In Fig. 7a ist durch die Pfeile angedeutet, daß zum Herstellen der Steckverbindung das die Ferrule 14 aufnehmende Verbinderteil 10 an den von außen zugänglichen Betätigungsbereichen 31 des Verbinderelementes 20 zu halten ist. Zum Lösen der Steckverbindung ist dagegen - wie in Fig. 7b durch die Pfeile angedeutet - das Sperrelement 18 an seinen Betätigungsbereichen 33 zu ergreifen.

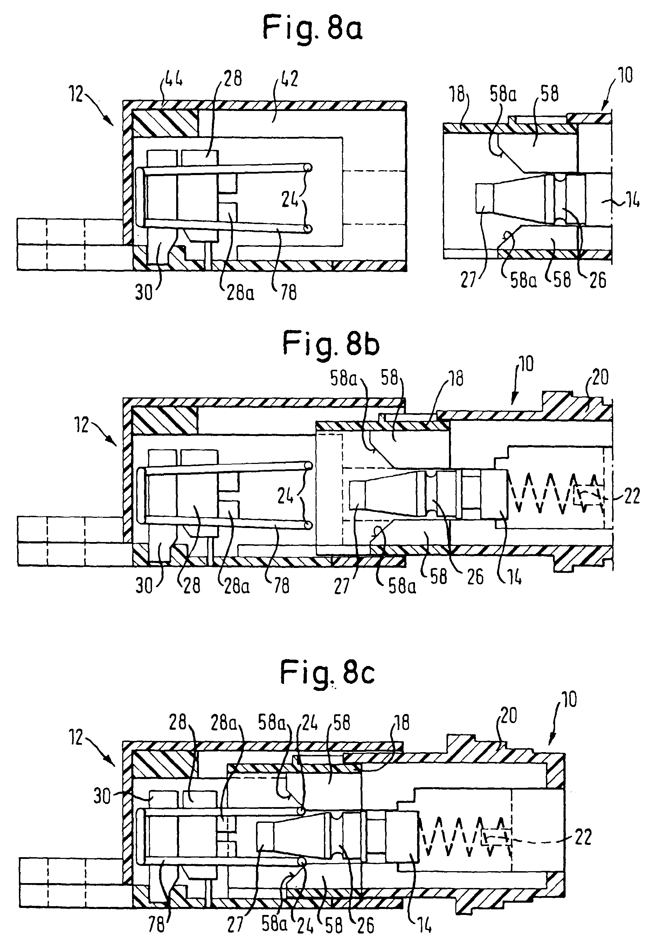

Diese Art und Weise der Betätigung des Verbinderteils 10 ergibt sich aus dem erfindungsgemäßen Aufbau des Steckverbinders, dessen Funktionsweise im folgenden anhand der Fig. 8a - 8e näher erläutert wird.

In Fig. 8a sind am Verbinderteil 12 der Federdraht 78, dessen sich senkrecht zur Zeichenebene erstreckenden Verriegelungsabschnitte 24 sowie die Umrisse des elektrooptischen Moduls 28 und des Positionierstücks 30 zu erkennen.

Bei dem in Fig. 8a nur teilweise dargestellten Verbinderteil 10 sind die mit den Schrägen 58a versehenen Sperrabschnitte 58 des Sperrelementes 18 zu erkennen, zwischen denen die axial fest mit dem nicht dargestellten Verbinderelement 20 gekoppelten Ferrule 14 angeordnet sind. Während der sich verjüngende vordere Bereich 27 der Ferrule 14 jeweils über die Sperrabschnitte 58 hinaus vorsteht, befindet sich der mit der Umfangsausnehmung 26 versehene Bereich der Ferrule 14 in axialer Richtung auf der Höhe der nicht abgeschrägten Bereiche der Sperrabschnitte 58.

In Fig. 8b, in welcher der Zustand zu Beginn des Zusammensteckens der beiden Verbinderteile 10, 12 dargestellt ist, ist teilweise auch das Verbinderelement 20 zu erkennen, das in dieser Phase durch die Schraubenfedern 22 am hinteren Ende des Sperrelementes 18 gehalten wird.

In dem Zustand gemäß Fig. 8c sind die beiden Verbinderteile 10, 12 bereits derart weit zusammengesteckt, daß die Ferrule 14 jeweils mit ihrem verjüngten vorderen Bereich 27 zwischen den Verriegelungsabschnitten 24 hindurch in die in Fig. 6a und 6b erkennbaren Durchgänge 48 hineinragen. Die Verriegelungsabschnitte 24 des Federdrahtes 78 werden beim Einschieben der Ferrule 14 durch deren vorderen Bereich 27 auseinandergedrückt und in dem Zustand gemäß Fig. 8c durch die Schrägen 58a der Sperrabschnitte 58 auf die Ferrule 14 gedrückt.

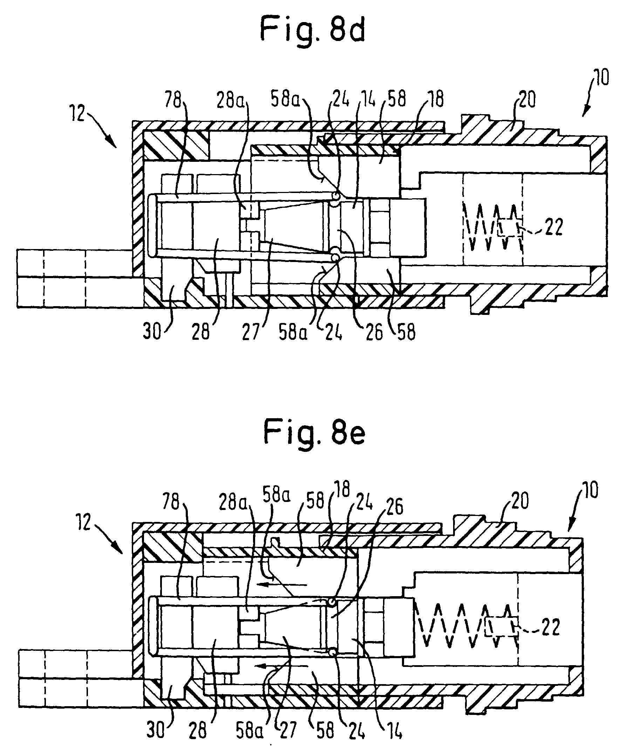

In Fig. 8d sind die Ferrule 14 mittels des axial fest mit diesen gekoppelten Verbinderelementes 20 weiter in das Verbinderteil 12 hineingesteckt worden, wobei sich die Ferrule 14 nunmehr in ihren vorbestimmten endgültigen axialen Positionen relativ zum Verbinderteil 12 und somit zum elektrooptischen Modul 28 befinden. Die vorderen Enden der Ferrule 14 und somit die Lichteintritts- und/oder Lichtaustrittsflächen der jeweiligen Lichtleiter 16 befinden sich daher innerhalb des jeweiligen Koppelbereiches 28a und somit in einem zur Einkopplung bzw. Auskopplung von Licht optimalen Abstand zum elektrooptischen Modul 28.

Bei der Weiterbewegung der Ferrule 14 aus der Position gemäß Fig. 8c in diejenige von Fig. 8d waren die Sperrabschnitte 58 und somit das Sperrelement 18 durch die Verriegelungsabschnitte 24 des Federdrahtes 78 blockiert, da die Verriegelungsabschnitte 24 nicht nach innen und die Sperrabschnitte 58 nicht nach außen ausweichen konnten. Bei der Weiterbewegung des mit den Ferrulen 14 axial fest gekoppelten Verbinderelementes 20 sind die Schraubenfedern 22 folglich zwischen dem weiterbewegten Verbinderelement 20 und dem durch die Verriegelungsabschnitte 24 blockierten Sperrelement 18 zusammengedrückt worden, wie es in Fig. 8d gezeigt ist.

Sobald die Ferrule 14 ihre endgütlige Position erreicht haben, können die Verriegelungsabschnitte 24 in die Umfangsausnehmungen 26 der Ferrule 14 hinein ausweichen und werden über die Schrägen 58a des durch die zusammengedrückten Schraubenfedern 22 in Zusammensteckrichtung vorgespannten Sperrelementes 18 in die Umfangsausnehmungen 26 gedrückt. Die Blockierung der Sperrabschnitte 58 wird dadurch aufgehoben, so daß die in den Schraubenfedern 22 gespeicherte Energie frei wird und sich das Sperrelement 18 ruckartig nach vorn in das das elektrooptische Modul 28 aufnehmende Verbinderteil 12 hineinbewegt.

Fig. 8e zeigt den auf diese Weise erreichten endgültigen Zustand, in welchem die beiden Verbinderteile 10, 12 vollständig zusammengesteckt sind. Die Sperrabschnitte 58 des Sperrelementes 18 haben sich über die in den Umfangsausnehmungen 26 liegenden Verriegelungsabschnitte 24 geschoben, wodurch die Verriegelung der Ferrule 14 gesichert ist.

Die Verriegelungsabschnitte 24 des Federdrahtes 78 verhindern zum einen, daß die Ferrule 14 über das Verbinderelement 20 herausgezogen werden können. Da das Verbinderelement 20 axial fest mit den Ferrulen 14 gekoppelt ist, sind jedoch nicht nur die Ferrule 14 mit dem Verbinderteil 12, sondern zum anderen auch die beiden Verbinderteile 10, 12 miteinander verriegelt. Eine zusätzliche Verriegelung zwischen dem die Ferrule 14 aufnehmenden Verbinderteil 10 und dem Header 12 ist somit nicht erforderlich.

Zum Lösen der Steckverbindung ist lediglich das Sperrelement 18 an seinen Betätigungsbereichen 33 zu erfassen und zurückzuziehen. Sobald das Sperrelement 18 weit genug zurückgezogen ist, werden die Verriegelungsabschnitte 24 nicht mehr durch die Sperrabschnitte 58 in Richtung der Ferrulen 14 beaufschlagt, so daß die Verriegelungsabschnitte 24 außer Eingriff mit den Umfangsausnehmungen 26 gelangen können. Das Verbinderelement 20 und die mit diesem axial fest gekoppelten Ferrule 14 können folglich mittels des Sperrelementes 18 aus dem Verbinderteil 12 herausgezogen werden.

### Bezugszeichenliste

- 10: Verbinderteil
- 11: Fortsatz
- 12: Verbinderteil
- 12': Verbinderteil, Zwischenstück
- 14: Anschlußelement, Ferrule
- 16: Lichtleiter
- 17: Ummantelung
- 18: Sperrelement
- 20: Verbinderelement
- 21: hülsenartiger Abschnitt
- 22: Schraubenfeder
- 24: Verriegelungsabschnitt
- 26: Umfangsausnehmung
- 27: vorderer Bereich
- 28: elektrooptisches Modul
- 28a: Koppelbereich
- 28b: Anschluß
- 29: Verriegelungsbereich
- 30: Positionierstück
- 30a: federnder Bereich
- 31: Betätigungsbereich
- 32: Halterung
- 33: Betätigungsbereich
- 34: Betätigungsmulde
- 35: Aussparung
- 36: Ringvorsprung
- 40: Halbschale
- 41: Aufnahmevorrichtung
- 41a: Aufnahmekanal
- 42: Innenteil
- 43: Abschnitt
- 44: Außenteil
- 45: Durchgang
- 47: Aufnahmebereich
- 48: Durchgang
- 50: Koppelstück
- 52: Clip
- 54: Zapfen
- 56: Erhebung
- 58: Sperrabschnitt
- 58a: Schräge
- 60: Schräge
- 68: Eingriffsabschnitt
- 68a: Haltevorsprung
- 68b: Eingriffsvorsprung
- 78: Federdraht

## Patentansprüche

1. Steckverbinder mit zwei zusammensteckbaren und miteinander verriegelbaren Verbinderteilen (10, 12), wobei wenigstens das eine Verbinderteil (10) mit zumindest einem Anschlußelement (14), insbesondere einer optischen Ferrule für Lichtleiter (16), koppelbar ist, das bei zusammengesteckten Verbinderteilen (10, 12) in einer vorbestimmten axialen Position relativ zu dem anderen Verbinderteil (12) gehalten ist,
dadurch **gekennzeichnet,**
daß das mit dem einen Verbinderteil (10) axial fest gekoppelte Anschlußelement (14) beim Zusammenstecken mit dem anderen Verbinderteil (12) verriegelbar und die Verriegelung durch ein relativ zu den Verbinderteilen (10, 12) axial bewegliches Sperrelement (18) sicherbar ist.

2. Steckverbinder nach Anspruch 1,
dadurch **gekennzeichnet,**
daß die Verriegelung und die Sicherung beim Zusammenstecken der Verbinderteile (10, 12) automatisch erfolgen.

3. Steckverbinder nach Anspruch 1 oder 2,
dadurch **gekennzeichnet,**
daß die Verriegelung des Anschlußelementes (14) bei in der vorbestimmten axialen Position befindlichem Anschlußelement (14) erfolgt.

4. Steckverbinder nach zumindest einem der vorhergehenden Ansprüche,
dadurch **gekennzeichnet,**
daß das Sperrelement (18) relativ zu einem axial fest mit dem Anschlußelement (14) koppelbaren Verbinderelement (20) des Verbinderteils (10) bewegbar ist.

5. Steckverbinder nach zumindest einem der vorhergehenden Ansprüche,
dadurch **gekennzeichnet,**
daß beim Zusammenstecken der Verbinderteile (10, 12) die Bewegung des Sperrelementes (18) durch die von dem Anschlußelement (14) beaufschlagte Verriegelung solange blockiert ist, bis die Verriegelung mit dem relativ zum blockierten Sperrelement (18) weiterbewegten Anschlußelement (14) in Eingriff steht, insbesondere verrastet ist.

6. Steckverbinder nach zumindest einem der vorhergehenden Ansprüche,
dadurch **gekennzeichnet,**
daß zwischen dem Sperrelement (18) und dem Verbinderelement (20) zumindest ein elastisch verformbares Element, insbesondere eine Schraubenfeder (22), vorgesehen ist.

7. Steckverbinder nach zumindest einem der vorhergehenden Ansprüche,
dadurch **gekennzeichnet,**
daß das Sperrelement (18) im Bereich seines mit der Verriegelung zusammenwirkenden Endes abgeschrägt ist.

8. Steckverbinder nach zumindest einem der vorhergehenden Ansprüche,
dadurch **gekennzeichnet,**
daß zumindest ein Verriegelungsabschnitt (24) der Verriegelung durch das bevorzugt blockierte Sperrelement (18), insbesondere durch wenigstens eine Schräge (58a) des Sperrelementes (18), in Richtung einer Umfangsausnehmung (26) des Anschlußelementes (14) beaufschlagbar ist.

9. Steckverbinder nach zumindest einem der vorhergehenden Ansprüche,
dadurch **gekennzeichnet,**
daß die Verriegelung für das Anschlußelement (14) wenigstens einen federnden und durch das Anschlußelement (14) beaufschlagbaren Verriegelungsabschnitt (24) umfaßt, der vorzugsweise mit dem Anschlußelement (14), insbesondere mit einer Umfangsausnehmung (26) des Anschlußelementes (14), in Eingriff bringbar, insbesondere verrastbar ist.

10. Steckverbinder nach zumindest einem der vorhergehenden Ansprüche,
dadurch **gekennzeichnet,**
daß die Verriegelung wenigstens zwei etwa parallel verlaufende und durch das Anschlußelement (14) aufspreizbare Verriegelungsabschnitte (24) umfaßt.

11. Steckverbinder nach zumindest einem der vorhergehenden Ansprüche,
dadurch **gekennzeichnet,**
daß der bzw. jeder Verriegelungsabschnitt (24) einstückig mit dem Verbinderteil (12) ausgebildet ist.

12. Steckverbinder nach zumindest einem der vorhergehenden Ansprüche,
dadurch **gekennzeichnet,**
daß mehrere, insbesondere zwei, Verriegelungsabschnitte (24) vorgesehen sind, die zumindest im Bereich ihres freien Endes eine Steckaufnahme für das Anschlußelement (14) bilden.

13. Steckverbinder nach zumindest einem der vorhergehenden Ansprüche,
dadurch **gekennzeichnet,**
daß der bzw. jeder Verriegelungsabschnitt (24) wenigstens einen Eingriffsabschnitt (68) aufweist, der sowohl zum Blockieren des Sperrelementes (18) als auch zum Eingriff, insbesondere zum Verrasten mit dem Anschlußelement (14) ausgebildet ist.

14. Steckverbinder nach Anspruch 13,
dadurch **gekennzeichnet,**
daß der Eingriffsabschnitt (68) am freien Ende des sich etwa parallel zur Zusammensteckrichtung erstreckenden Verriegelungsabschnittes (24) ausgebildet ist.

15. Steckverbinder nach Anspruch 13 oder 14,
dadurch **gekennzeichnet,**
daß der Eingriffsabschnitt (68) einen etwa radial nach außen abstehenden Haltevorsprung (68a) für das Sperrelement (18) und einen etwa radial nach innen vorstehenden Eingriffsvorsprung (68b) für das Anschlußelement (14) aufweist.

16. Steckverbinder nach zumindest einem der Ansprüche 1 bis 10,
dadurch **gekennzeichnet,**
daß die Verriegelung durch wenigstens einen Federdraht (78) gebildet ist.

17. Steckverbinder nach Anspruch 16,
dadurch **gekennzeichnet,**
daß der Federdraht (78) bügelartig gebogen ist.

18. Steckverbinder nach Anspruch 16 oder 17,
dadurch **gekennzeichnet,**
daß der Federdraht (78) zunächst etwa zu einer U-Form und die U-Form daraufhin wiederum etwa U-förmig gebogen ist, wobei die etwa parallel zueinander und etwa senkrecht zur Zusammensteckrichtung verlaufenden freien Enden des Federdrahtes (78) als Verriegelungsabschnitte (24) für das Anschlußelement (14) dienen.

19. Steckverbinder nach zumindest einem der vorhergehenden Ansprüche,
dadurch **gekennzeichnet,**
daß die Außenseite des mit dem Anschlußelement (14) koppelbaren Verbinderteils (10) teilweise von dem Sperrelement (18) gebildet ist.

20. Steckverbinder nach zumindest einem der vorhergehenden Ansprüche,
dadurch **gekennzeichnet,**
daß das mit dem Anschlußelement (14) koppelbare Verbinderteil (10) zum Herstellen der Steckverbindung über das Verbinderelement (20) und zum Lösen der Steckverbindung über das Sperrelement (18) betätigbar ist.

21. Steckverbinder nach zumindest einem der vorhergehenden Ansprüche,
dadurch **gekennzeichnet,**
daß das mit der Verriegelung versehene Verbinderteil (12') als ein Zwischenstück ausgebildet ist, welches beidseitig mit einem ein Anschlußelement (14) aufweisenden Verbinderteil (10) zusammensteckbar ist.
